# EUROPÄISCHE PATENTSCHRIFT

(11) **EP 2 629 113 B1**
(45) Veröffentlichungstag und Bekanntmachung des Hinweises auf die Patenterteilung: **26.04.2017**
(21) Anmeldenummer: 13167875.7
(22) Anmeldetag: 01.04.2010
(51) Int. Cl.: G01S 7/292, G01S 13/92, G01S 13/93, G01S 7/02, G01S 7/03

(54) **RADARSYSTEM MIT ANORDNUNGEN UND VERFAHREN ZUR ENTKOPPLUNG VON SENDE- UND EMPFANGSSIGNALEN SOWIE UNTERDRÜCKUNG VON STÖREINSTRAHLUNGEN**
RADAR SYSTEM HAVING ARRANGEMENTS AND METHOD FOR DECOUPLING TRANSMISSION AND RECEPTION SIGNALS AND FOR SUPPRESSING INTERFERENCES
SYSTÈME RADAR DOTÉ D'AGENCEMENTS ET PROCÉDÉ POUR DÉCOUPLER DES SIGNAUX D'ÉMISSION ET DE RÉCEPTION AINSI QUE POUR ANNULER DES RAYONNEMENTS PARASITES

(30) Priorität: 06.04.2009 DE 102009016478
(43) Veröffentlichungstag der Anmeldung: 21.08.2013
(62) Teilanmeldung aus: 10726875.7
(73) Patentinhaber: Conti Temic Microelectronic GmbH, 90411 Nürnberg (DE)
(72) Erfinder: Wintermantel, Markus Dr., 88131 Lindau (DE)

(56) Entgegenhaltungen:
- WO-A1-2008/040341
- DE-A1- 19 546 653
- DE-A1-102007 008 944
- US-A1- 2003 179 131

## Beschreibung

Die Erfindung bezieht sich auf ein Radarsystem zum Einsatz für Fahrerassistenzsysteme im Kraftfahrzeug. Das Radarsystem besitzt erfindungsgemäß Anordnungen und Verfahren zur Entkopplung von Sende- und Empfangssignalen sowie Unterdrückung von Störeinstrahlungen.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Neben einer Erhöhung des Komforts werden zukünftig Sicherheitsfunktionen eine immer größere Rolle spielen, wobei die Reduzierung des Bremsweges in Notsituationen die wichtigste Rolle spielen dürfte. Das Spektrum der entsprechenden Fahrerassistenzfunktionen reicht von einem automatischen Vorfüllen der Bremse zur Reduktion der Bremslatenz (Prefill), über einen verbesserten Bremsassistenten (BAS+) bis hin zur autonomen Notbremsung.

Für Fahrerassistenzsysteme der oben beschriebenen Art werden heute vorwiegend Radarsensoren eingesetzt. Diese arbeiten auch bei schlechten Wetterbedingungen zuverlässig und können neben dem Abstand von Objekten auch direkt deren Relativgeschwindigkeit über den Dopplereffekt messen.

Diese Radarsensoren sind heute aber noch recht teuer und ihrer Detektionsqualität nicht perfekt, was insbesondere für Sicherheitsfunktionen sehr kritisch ist; als Gründe dafür seien exemplarisch genannt:
- Für eine genau Bestimmung der lateralen Position von Objekten sind Strahlungskeulen in vielen unterschiedlichen Richtungen nötig; dies wird in zunehmendem Maße durch mehrere in einem Sensor integrierte Sende- und bzw. oder Empfangsantennen vorzugsweise in planarer Ausführung realisiert, welche parallel oder quasi-parallel betrieben werden. Damit sich die Antennen nicht gegenseitig beeinflussen, müssen sie sehr gut entkoppelt bzw. isoliert sein, was bisher auch durch kostspielige Schaltungstechnik nicht zufriedenstellend erreicht werden kann.
   Als Beispiel seien 24GHz-UWB-Sensoren genannt (UWB = Ultra Wide Band); auf Grund der sehr restriktiven Frequenzzulassung darf nur sehr wenig Sendeleistung abgestrahlt werden, was dazu führt, dass die über die eigentlichen Empfangsantennen durch unzureichende Isolation ungewollt abgestrahlte Leistung ähnlich groß ist wie die über die Sendeantennen abgestrahlte Leistung, was zu Problemen bei der Azimutwinkelschätzung von Objekten und zu Empfindlichkeitsverlusten in einzelnen Winkelbereichen führen kann.
- Bei Verwendung mehrerer Antennen werden mehrere parallele Empfangspfade implementiert, was zu hohen Kosten für die analoge und digitale Signalverarbeitung führt.
- Durch andere Systeme bewirkte Störeinkopplungen bzw. -einstrahlungen im Radarfrequenzbereich oder im Bereich, in welchem der niederfrequente Teil der Auswerteelektronik arbeitet, können zu fehlerhaften Detektionen und damit zu Fehlreaktionen führen.

Die Offenlegungsschrift WO2008/040341A1 offenbart ein Verfahren für ein Radarsystem zur Umfelderfassung mit einer Kompensation von Störsignalen. Das Verfahren sieht vor, dass in einem Messzyklus ein oder mehrere gleiche hochfrequente Einzelsignale abgestrahlt werden und der zeitliche Abstand dieser Einzelsignale im Mittel größer ist als die zu einer maximal interessierenden Entfernung korrespondierende Laufzeit von empfangenen Signalen. Die empfangenen Signale werden mit Hochfrequenzsignalen gemischt, wodurch niederfrequente Empfangssignale entstehen, welche Folgen von Einzelsignalen darstellen. Zur Kompensation der Störsignale werden über aufeinanderfolgende niederfrequente Einzelempfangssignale die Phasenlagen variiert.

In der Schrift DE19546653A1 wird ein Verfahren zur Verminderung von Störeinflüssen im Empfangszeig von Puls-Dopplerradargeräten durch andere gleichartige Geräte vorgestellt. Dazu wird vorgeschlagen, dass Bursts ausgesendet werden, die sich aus einzelnen Sendeimpulsen zusammensetzten. Die Sendeimpulse weisen zueinander unterschiedliche Phasensprünge auf, die einer vorgegebenen Codierung entsprechen. Die empfangenen Echos werden nach dem vorgegeben Code dekodiert und Störeinflüsse, die durch andere Radargeräte verursacht werden, können so identifiziert werden.

Ein Verfahren zur Kompensation von Interferenzsignalen in einem Radarsystem wird in der Schrift US2003/0179131A1 angegeben. Dazu wird ein Trägersignal erzeugt, dass im Sendepfad mit einer unverzögerten Pulsfolge und im Empfangspfad mit einer verzögerten Pulsfolge moduliert wird. Im Empfangspfad wird so ein Referenzsignal erzeugt, das mit der empfangenen Radarstrahlung gemischt wird. Die Modulation des Trägersignals erfolgt mit einer BPSK (binary phase shift keying) Phasenmodulation.

### Aufgabe der Erfindung und Lösung

Aufgabe der Erfindung ist es, ein Radarsystem und ein Verfahren für ein Kraftfahrzeug anzugeben das die Auswirkung von Störstrahlung unterdrückt.

Diese Aufgabe wird grundsätzlich mit Hilfe eines Verfahrens und eines Radarsystems gemäß den Ansprüchen 1-13 gelöst. Insbesondere ist mit der Unterdrückung von Störstrahlung die Entkopplung bzw. Isolation von Sende- und Empfangssignalen gemeint, was zu einer genauen Bestimmung der lateralen Lage von Objekten und zur Vermeidung von Empfindlichkeitsverlusten führt. Weiterhin ist die Unterdrückung von Störeinstrahlungen umfasst.

Die Vorteile der Erfindung ergeben sich aus reduzierten Anforderungen insbesondere an die Komponenten der Hochfrequenzelektronik und der analoge und digitale Signalverarbeitung, woraus sich für das Radarsystem reduzierte Kosten ergeben, sowie aus einer verbesserten und robusten Detektionsqualität.

### Beschreibung der Zeichnungen

In Fig. 1 ist die erste Ausführungsform eines Radarsystems dargestellt.
Fig. 2 zeigt die Frequenz der Sende- und der Empfangssignale, welche aus sogenannten Frequenzrampen besteht.
Fig. 3 zeigt ein abgetastetes Signal bei Anwesenheit von zwei Objekten vor der ersten DFT (links) und nach der ersten DFT (rechts).
In Fig. 4 ist der über die Frequenzrampen rotierende komplexe Spektralwert im Entfernungstor 4, in welchem sich genau ein Objekt befindet, dargestellt.
Fig. 5 zeigt das zweidimensionale komplexwertige Spektrum nach der zweiten DFT.
Fig. 6 erläutert die unterschiedlichen Phasenlagen an den vier Empfangsantennen und ihren Zusammenhang mit dem Azimutwinkel.
Fig. 7 zeigt die Daten vor der dreidimensionalen DFT (links) und das dreidimensionale komplexwertige Spektrum danach (rechts).
Fig. 8 zeigt für eine starke 500kHz-Einkopplung das Dopplerspektrum eines Empfangskanals im betroffenen Entfernungstor sechs mit und ohne zufällige Invertierung.
In Fig. 9 ist das Sendeantennendiagramm mit und ohne die ungewollt über die Empfangsantennen abgestrahlte Leistung dargestellt.
In Fig. 10 ist die zweite Ausführungsform eines Radarsystems dargestellt.
Fig. 11 zeigt die dritte Ausführungsform eines Radarsystems.
Fig. 12 zeigt die vierte Ausführungsform eines Radarsystems.

### Ausführungsbeispiele

Die Erfindung wird nun anhand beispielhafter Ausführungen von Radarsystemen erläutert. Die in den Ausführungen beschriebene Erfindung und die angegebenen Zahlenbeispiele beziehen sich auf ein 24 GHz Radar. Dies soll jedoch die Erfindung, nicht auf den 24 GHz Bereich beschränken, sondern die Erfindung wird für hochfrequente Radarsysteme beansprucht und kann von einem Fachmann ohne weiteres auch bei anderen Frequenzen, z. B. 77 GHz, ausgeführt werden.

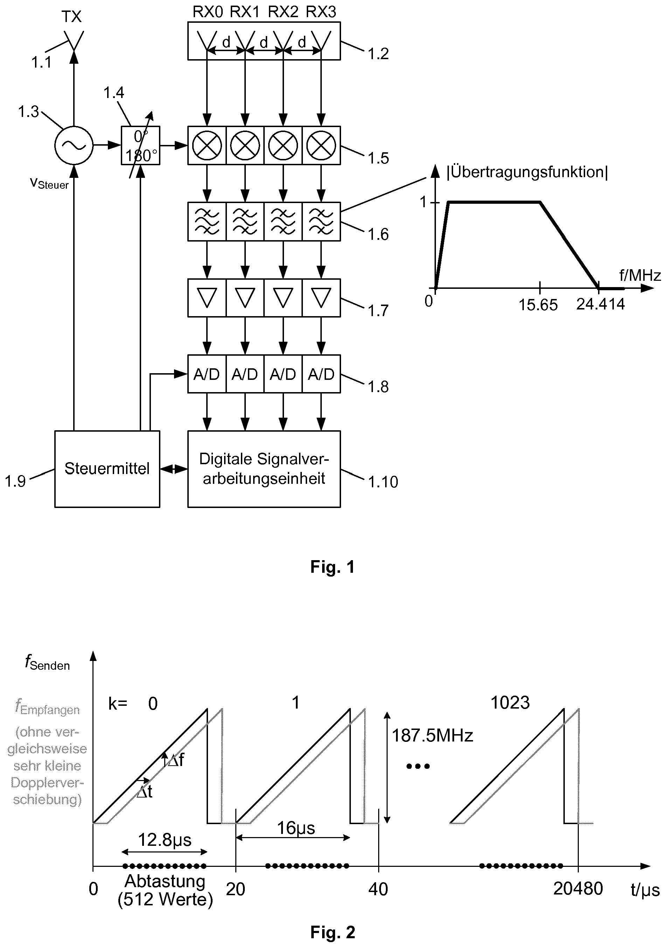

### Ausführung 1 nach Fig. 1

Zuerst wird die beispielhafte Ausführung eines Radarsystems, welches in Fig. 1 grob dargestellt ist, betrachtet. Das Radarsystem besitzt eine Sendeantenne 1.1 zur Abstrahlung von Sendesignalen und eine Mehrzahl insbesondere von Empfangsantennen 1.2 zum gleichzeitigen Empfang von an Objekten reflektierten Sendesignalen.

Im Folgenden wird ein Ausführungsbeispiel mit 4 Empfangsantennen gegeben, das ohne weiteres mit einer beliebigen Mehrzahl von Empfangsantennen und zumindest einer Empfangsantenne ausführbar ist.

Alle Antennen (Sende- und Empfangsantennen) haben in Elevation und Azimut dieselbe Strahlform. Die vier Empfangsantennen befinden sich in einer Ebene und haben jeweils gleichen lateralen, d. h. horizontalen Abstand d.

Die Sendesignale werden aus dem Hochfrequenz-Oszillator 1.3 im 24GHz-Bereich gewonnen, welcher über eine Steuerspannung V_{Steuer} in seiner Frequenz verändert werden kann; die Steuerspannung wird in den Steuermitteln 1.9 erzeugt. Die von den Antennen empfangenen Signale werden in den reellwertigen Mischern 1.5 ebenfalls mit dem Signal des Oszillators 1.3 in den Niederfrequenzbereich heruntergemischt; die Phase des Oszillatorsignals kann dazu noch über den schaltbaren Invertierer 1.4 um 180° gedreht oder unverändert gelassen werden, die Ansteuerung des schaltbaren Invertierers erfolgt aus den Steuermitteln 1.9. Danach durchlaufen die Empfangssignale jeweils ein Bandpassfilter 1.6 mit der dargestellten Übertragungsfunktion, einen Verstärker 1.7 und einen A/D-Wandler 1.8. Anschließend werden sie in einer digitalen Signalverarbeitungseinheit 1.10 weiterverarbeitet. Damit die Entfernung von Objekten gemessen werden kann, wird, wie in Fig. 2 dargestellt, die Frequenz des Hochfrequenz-Oszillators und damit der Sendesignale sehr schnell linear verändert, z. B. in 16µs um 187.5 MHz. Man spricht dabei von einer Frequenzrampe. Die Frequenzrampen werden periodisch wiederholt, z.B. alle 20µs, insgesamt gibt es also in diesem Zahlenbeispiel 1024 Frequenzrampen.

Das Empfangssignal eines einzelnen Objekts ist nach Mischung und damit auch am A/D-Wandler für jede Frequenzrampe und jeden der vier Empfangskanäle eine sinusförmige Schwingung. Dies kann man sich mit Hilfe von Fig. 2 wie folgt erklären: Hat das Objekt die radiale Relativgeschwindigkeit Null zum Radarsystem, so ist die Frequenzdifferenz Δf zwischen gesendetem Signal und empfangenem Signal konstant und dabei proportional zur Signallaufzeit Δt und damit proportional zur radialen Entfernung Δr = c·Δt/2, wobei c die Lichtgeschwindigkeit ist und der Faktor 1/2 berücksichtigt, dass sich die Laufzeit Δt auf das Hin- und Zurücklaufen der Welle bezieht. Die Frequenzdifferenz Δf ergibt sich z.B. bei obiger Auslegung zu Δf = 2r/c·187.5MHz/16µs = r·78.125kHz/m. Da das empfangene Signal in jedem Empfangskanal mit der Oszillator- und damit Sendefrequenz gemischt wird, ergibt sich nach dem Mischer jeweils eine sinusförmige Schwingung mit der Frequenz Δf. Diese Frequenz liegt im MHz-Bereich und wird bei einer nichtverschwindenden (radialen) Relativgeschwindigkeit noch um die Dopplerfrequenz verschoben, welche aber nur im kHz-Bereich liegt und deshalb gegenüber dem Frequenzanteil durch die Objektentfernung näherungsweise vernachlässigbar ist. Gibt es mehrere Objekte, so ist das Empfangssignal eine Überlagerung mehrerer sinusförmiger Schwingungen unterschiedlicher Frequenz. Während jeder Frequenzrampe werden in allen 4 Empfangskanälen die Empfangssignale am A/D-Wandler z.B. 512 mal jeweils im Abstand von z.B. 25ns, also mit 40 MHz, abgetastet, siehe dazu Fig. 2. Wie aus Fig. 2 ersichtlich ist, macht eine Signalabtastung nur in dem Zeitbereich Sinn, wo Empfangssignale von Objekten im interessierenden Entfernungsbereich eintreffen, nach Rampenstart muss also wenigstens die zur maximal interessierenden Entfernung korrespondierende Laufzeit abgewartet werden. Bei einer maximalen Entfernung von 200m entspricht dies 1.25 µs.

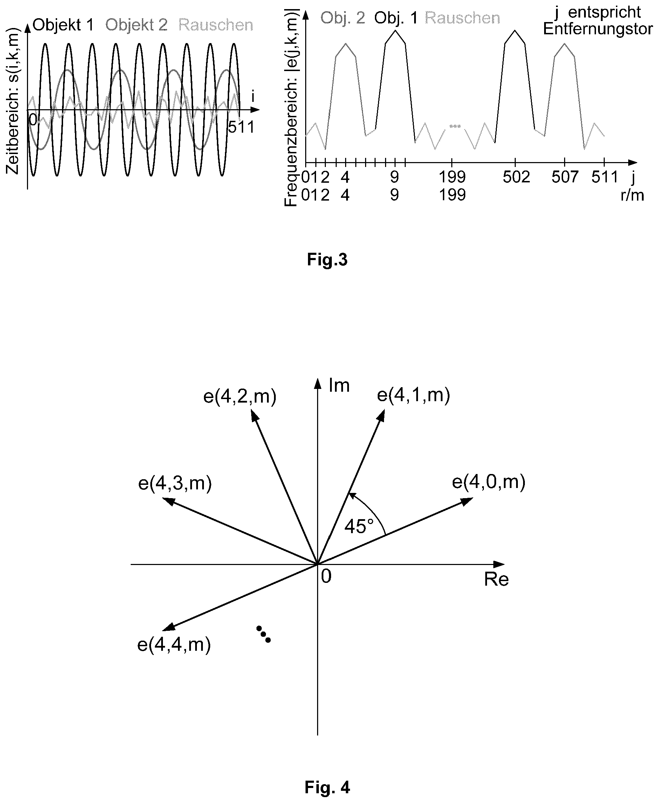

Dann wird über die z.B. 512 Abtastwerte jeder Frequenzrampe und jedes Empfangskanals eine diskrete Fouriertransformation (DFT) in Form einer schnellen Fouriertransformation (FFT = Fast Fourier Transform) gebildet. Dadurch kann man Objekte in unterschiedlichen Entfernungen, welche zu unterschiedlichen Frequenzen führen, trennen. Dies ist in Fig. 3 dargestellt, links ist Signal vor DFT bei Anwesenheit von zwei Objekten, rechts nach DFT dargestellt. Dabei ist k die Laufvariable über die 1024 Frequenzrampen und m die Laufvariable über die vier Empfangskanäle RXm. Jede der diskreten Frequenzstützstellen j der DFT korrespondiert zu einer Entfernung r und kann deshalb analog zu Pulsradaren auch als Entfernungstor bezeichnet werden. Bei obiger Auslegung haben die Entfernungstore gerade einen Abstand und damit eine Breite von einem Meter. Das ergibt sich aus r·78.125kHz/m = 1/(12.8µs). In den Entfernungstoren, in welchen sich Objekte befinden, treten in der DFT Leistungsspitzen auf. Da die abgetasteten Empfangssignale reellwertig sind und der obere Übergangsbereich der analogen Bandpassfilter 1.5 eine Frequenzbandbreite von z.B. 8.764MHz hat, dies entspricht dem Bereich von 112 Frequenzstützstellen, können in diesem Zahlenbeispiel nur 200 der 512 diskreten Frequenzstützstellen weiterverarbeitet werden. Es sei angemerkt, dass beliebig schmale Übergangsbereiche von Filtern nicht realisierbar sind. Die Filter 1.5 dämpfen kleine Frequenzen und somit die Empfangssignale von nahen Objekten, um eine Übersteuerung der Verstärker 1.6 und der A/D-Wandler 1.7 zu vermeiden (die an den Antennen empfangenen Signale werden mit abnehmendem Objektabstand ja stärker).

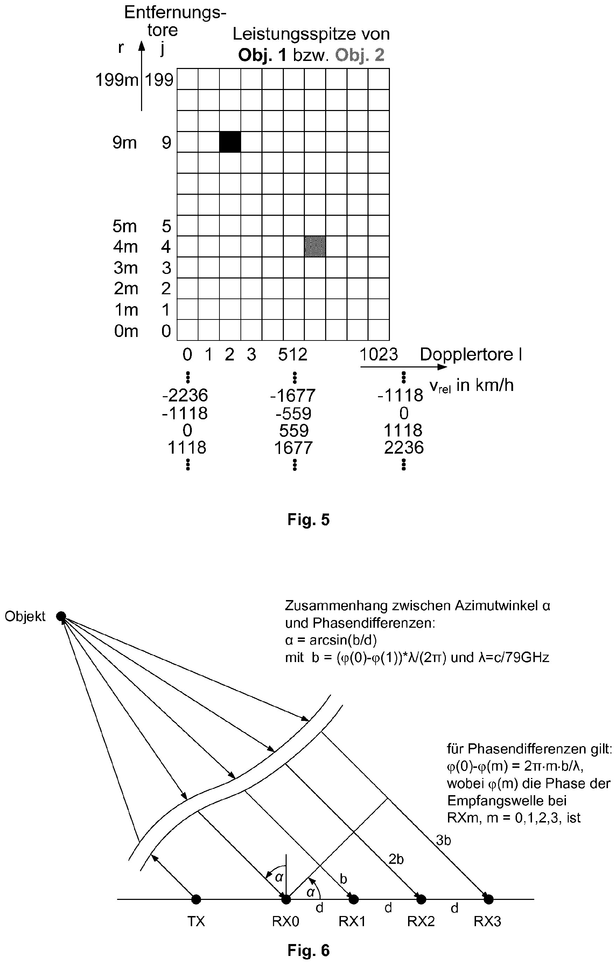

Über die z.B. 1024 Frequenzrampen (k = 0,1,...,1023) fallen in jedem Empfangskanal m (m=0,1,2,3) für jedes Entfernungstor j, also jede der z.B. 200 betrachteten Frequenzstützstellen, komplexe Spektralwerte e(j,k,m) an. Gibt es in der zu einem Entfernungstor korrespondierenden Entfernung genau ein Objekt, so rotiert der komplexe Spektralwert in diesem Entfernungstor j über die z.B. 1024 Frequenzrampen mit der Dopplerfrequenz, da sich von Frequenzrampe zu Frequenzrampe die Entfernung (im mm-Bereich oder darunter) und damit die Phasenlage der zugehörigen Schwingung gleichförmig ändert. Die beispielhaft in Fig. 4 dargestellte Phasenänderung von 45° pro Frequenzrampe korrespondiert zu einer Entfernungsänderung des Objekts von λ/(8·2) = 0.78mm, wobei die Wellenlänge in diesem Zahlenbeispiel
λ = c/24.15GHz = 12.4mm ist und der Faktor 2 im Nenner das Hin- und Zurücklaufen der Wellen berücksichtigt, woraus sich die Relativgeschwindigkeit vᵣₑₗ = 0.78mm/20µs = 140km/h ergibt. Mehrere Objekte mit unterschiedlicher Relativgeschwindigkeit im selben Entfernungstor werden dadurch getrennt, dass für jeden Empfangskanal und jedes Entfernungstor über die in den z.B. 1024 Frequenzrampen anfallenden komplexen Spektralwerte eine zweite DFT gerechnet wird. Jede diskrete Frequenzstützstelle 1 dieser zweiten DFT korrespondiert zu einem Satz von Dopplerfrequenzen. Wegen der Abtastung der Dopplerfrequenz kann sie nur bis auf ein unbekanntes ganzzahliges Vielfaches ihrer Abstastfrequenz bestimmt werden und somit einem Satz von Relativgeschwindigkeiten vᵣₑₗ von Objekten, so dass die diskreten Frequenzstützstellen der zweiten DFT als Relativgeschwindigkeitstore bezeichnet werden können. Bei der hier betrachteten beispielhaften Auslegung gibt es aus dem Satz möglicher Relativgeschwindigkeiten immer nur eine für den Straßenverkehr sinnvolle bzw. mögliche. Dies ist in Fig. 5 dargestellt. Die zweite DFT dient nicht nur zur Ermittlung der Relativgeschwindigkeit, sondern sie erhöht durch ihre Integration auch die Detektionsempfindlichkeit, bei 1024 Frequenzrampen etwa um 10·log₁₀(1024) = 30dB.

Nach dieser zweiten DFT für die Relativgeschwindigkeiten ergibt sich für jeden Empfangskanal ein zweidimensionales komplexwertiges Spektrum, wobei die einzelnen Zellen als Entfernung-Relativgeschwindigkeit-Tore bezeichnet werden können und durch Objekte Leistungsspitzen am jeweils zugehörigen Entfernung-Relativgeschwindigkeit-Tor auftreten. Siehe dazu Fig. 5.

Schließlich wird dann noch die Information aus den vier Empfangskanälen (zu den vier Empfangsantennen) fusioniert. Die von der Sendeantenne stammende, an einem einzelnen Objekt reflektierte Welle kommt an den vier Empfangsantennen m, m=0,1,2,3, abhängig vom Azimutwinkel α mit unterschiedlichen Phasenlagen ϕ(m) an, da die Entfernungen zwischen Objekt und Empfangsantennen leicht unterschiedlich sind. Wegen der horizontalen Äquidistanz der Empfangsantennen nehmen die Phasenunterschiede über die vier Empfangsantennen linear zu bzw. ab. Siehe dazu Fig. 6. Eventuell abgesehen von konstanten und damit kompensierbaren Phasenverschiebungen bleiben diese Phasenunterschiede bis nach der zweiten DFT erhalten, so dass man über die vier Empfangskanäle in jedem Entfernung-Relativgeschwindigkeit-Tor eine digitale Strahlformung durchführen kann. Dazu bildet man Summen über die komplexen Werte der vier Empfangskanäle, welche jeweils mit einem Satz komplexer Faktoren mit linear zunehmender Phase multipliziert werden. Abhängig von der linearen Phasenänderung des jeweiligen Faktorensatzes resultieren Strahlungskeulen mit unterschiedlichen Strahlrichtungen. Die Strahlbreite dieser Strahlungskeulen ist deutlich geringer als diejenige der einzelnen Empfangsantennen. Die oben beschrieben Summation wird durch eine z.B. 8-Punkte-DFT realisiert, wobei die vier Werte der vier Empfangskanäle durch vier Nullen ergänzt werden; die diskreten Frequenzwerte dieser DFT korrespondieren zu unterschiedlichen Azimutwinkeln und können deshalb als Winkeltore n (z.B. n=0,1,....7) bezeichnet werden.

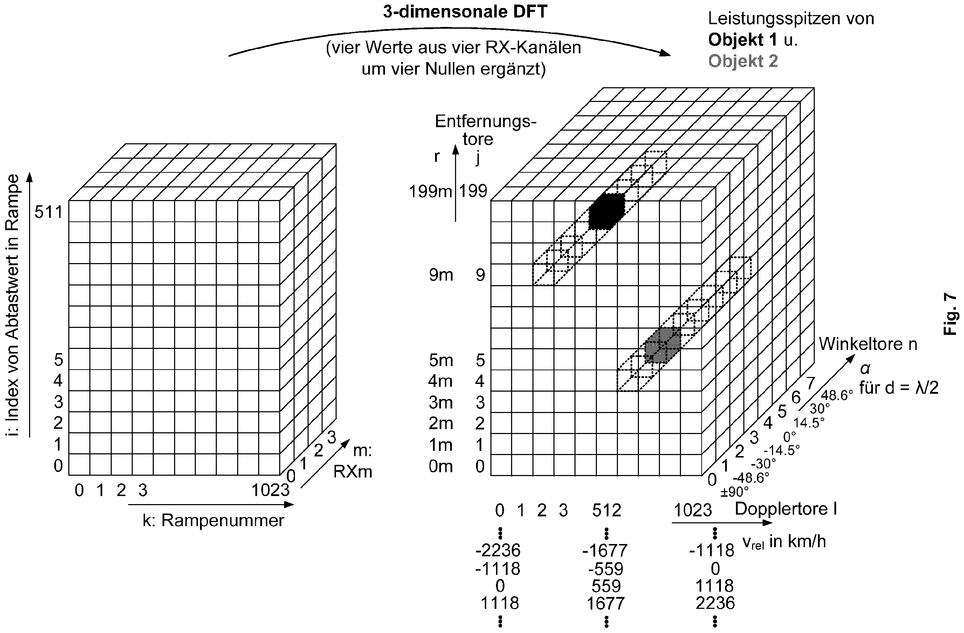

Nach dieser dritten DFT für die Azimutwinkel ergibt sich ein dreidimensionales komplexwertiges Spektrum, wobei die einzelnen Zellen als Entfernung-Relativgeschwindigkeit-Winkel-Tore bezeichnet werden können und durch Objekte Leistungsspitzen am jeweils zugehörigen Entfernung-Relativgeschwindigkeit-Winkel-Tor auftreten. Dies zeigt Fig. 7, links sind Daten vor dreidimensionaler DFT, rechts danach dargestellt. Durch Bestimmung der Leistungsspitzen kann man also Objekte detektieren und ihre Maße Entfernung, Relativgeschwindigkeit (abgesehen von eventuellen Mehrdeutigkeiten, wie oben beschrieben) und Azimutwinkel ermitteln. Da Leistungsspitzen bedingt durch die DFT-Fensterungen auch in benachbarten Zellen noch Pegel aufweisen, kann man die Objektmaße durch Interpolation in Abhängigkeit dieser Pegel noch wesentlich genauer als die Torbreiten bestimmen. Es sei bemerkt, dass die Fensterfunktionen der drei DFTs so gewählt werden, dass einerseits die Leistungsspitzen nicht zu breit werden, um eine genügende Objekttrennung zu erreichen, aber andererseits auch die Nebenkeulen der Fensterspektren nicht zu hoch werden, um auch schwach reflektierende Objekte in Anwesenheit stark reflektierender Objekte erkennen zu können. Aus der Höhe der Leistungsspitzen kann als viertes Objektmaß noch dessen Reflektionsquerschnitt geschätzt werden, welcher angibt, wie stark das Objekt die Radarwellen reflektiert. Die beschriebene Detektion von Objekten und die Bestimmung der zugehörigen Objektmaße stellen einen Messzyklus dar und liefern ein Momentanbild des Umfeldes. Dies wird z.B. etwa alle 30ms zyklisch wiederholt.

In realen Radarsystemen kommt es zu Störeinkopplungen bzw. -einstrahlungen im Radarfrequenzbereich (z.B. 24GHz) oder im Bereich, in welchem der niederfrequente Teil der Auswerteelektronik arbeit bzw. sensitiv ist (z.B. etwa im Bereich 50Hz bis 1GHz). Diese Störungen können durch andere Systeme oder das Radarsystem selbst bewirkt werden; Beispiele dafür sind:
- Einstrahlungen von Radarsystemen, welche im selben Hochfrequenzbereich arbeiten; diese Einstrahlungen dringen über die Empfangsantennen ein,
- von anderen Systemen im niederfrequenten Bereich (z. B. von Funksystemen außerhalb von Fahrzeug oder anderen Systemen im Fahrzeug) bewirkte Einstrahlungen bzw. Einkopplungen, welche über das nicht ideal abgeschirmte Gehäuse oder die fahrzeugseiten Zuleitungen eindringen,
- von Radarsystem selbst bewirkte Störsignale (z. B. Takt von Spannungsreglern), welche in die niederfrequenten Empfangskanäle einkoppeln.

Ohne spezielle Maßnahmen können alle diese Störungen dazu führen, dass vermeintlich Objekte detektiert werden, welche real gar nicht existieren, man spricht hier von Geisterobjekten, was zu fehlerhaften Reaktionen von Fahrerassistenzfunktionen führen kann. Koppelt z. B. der 500kHz-Takt eines Spannungsreglers gleichermaßen in alle 4 Empfangskanäle ein, so ergibt sich im dreidimensionalen Spektrum nach der dritten DFT eine Leistungsspitze, welche zu einer Objektdetektion in der Entfernung von gut 6m, beim Azimutwinkel 0° und mit der Relativgeschwindigkeit 0km/h führt. Wird mit dem Radarsystem die Funktion FSRA (Full Speed Range Radar) implementiert, bedeutet dies, dass fälschlicherweise permanent ein mit sehr knappem Abstand vorausfahrendes Fahrzeug gleicher Geschwindigkeit detektiert wird, auf welches das eigene Fahrzeug mit dem Ziel des Erreichens eines genügend großen Abstandes bremst. Da Abstand und Relativgeschwindigkeit dieses Geisterobjekts aber immer unverändert bleiben, es bremst quasi gleich stark wie das eigene Fahrzeug, führt das zu einer Bremsung fast in den Stillstand. Das ist natürlich nicht akzeptabel und kann sicherheitskritisch werden.

Um dieses Problem zu vermeiden, wird die Phase des zum Mischen benutzen Oszillatorsignals durch den schaltbaren Invertierer 1.4 von Rampe zu Rampe zufällig um 180° gedreht oder unverändert gelassen; innerhalb jeder Rampe bleibt die gewählte Einstellung des schaltbaren Invertierers jeweils konstant. Dadurch variieren die Phasen der Empfangssignale nach Mischung gleichermaßen. Sie sind also um 180° gedreht oder nicht. Für Frequenzrampen, bei welchen eine Invertierung stattgefunden hat, muss dies später wieder korrigiert werden, z. B. nach der ersten DFT. Dazu sind einfach die jeweiligen Werte mit -1 zu multiplizieren, dies entspricht einer Rückdrehung um 180°. Dann werden die von Reflektionen an Objekten resultierenden Nutzsignale über die drei DFTs wieder kohärent integriert. Es ergibt sich dasselbe dreidimensionale Spektrum wie ohne die zufällige Invertierung mit Leistungsspitzen an den entsprechenden Entfernung-Relativgeschwindigkeit-Winkel-Toren.

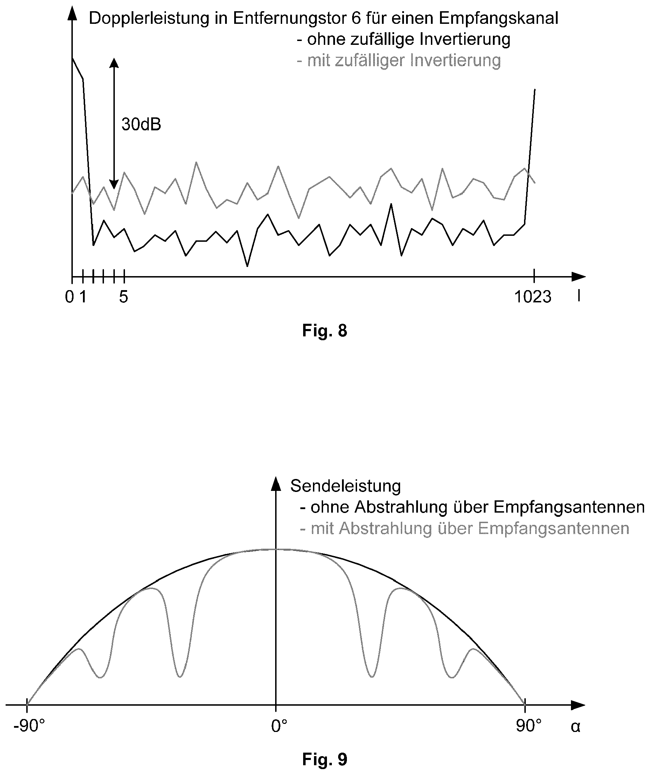

Die Einkopplungen in die niederfrequenten Empfangskanäle z. B. durch einen 500kHz-Takt eines Spannungsreglers sind vor der Korrektur der Phasenvariationen über die Rampen kohärent, werden aber nach der Korrektur durch die von Rampe zu Rampe zufällige Multiplikation mit -1 oder +1 nichtkohärent, so dass sie durch die in der zweiten und dritten DFT stattfindende Integration über die Rampen nicht mehr zu einer Leistungsspitze führen, sondern sich ihre Leistung auf alle diskreten Frequenzstützstellen zufällig verteilt und somit eine weißes Rauschen darstellt. Dieses Rauschen tritt im dreidimensionalen Spektrum in allen Zellen des Entfernungstors zu 6m sowie in abgeschwächter Form in den jeweils 1-2 vorausgehenden und nachfolgenden Entfernungstoren auf. In den Zellen anderer Entfernungstore tritt kein erhöhtes Rauschen auf, da die Einkopplungen innerhalb jeder Rampe kohärent wirken und so durch die erste DFT noch nicht in Rauschen umgewandelt werden. Das Rauschen durch die Einkopplungen liegt bei obiger beispielhafter Auslegung mit insgesamt 1024 Rampen bei etwa 10·log₁₀(1024) ≈ 30dB unter den Leistungsspitzen, welche sie ohne die Phasenvariation erzeugen würden. Dieses ist in Fig. 8 für eine starke 500kHz-Einkopplung dargestellt. Würde dieses Rauschen über dem Systemrauschen liegen, so wie in Fig. 8 dargestellt, so ergäbe sich eine Empfindlichkeitsreduktion des Radarsystems. Durch eine geeignete Ausgestaltung der Schaltung können solch starke Überkopplungen allerdings vermieden werden.

Für die anderen oben erwähnten Störeinkopplungen bzw. -einstrahlungen gilt selbiges Prinzip. Durch die zufällige Invertierung führen sie nur zu eventuell erhöhtem Rauschen in wenigen Entfernungstoren, sofern das durch sie erzeugte Rauschen über dem Systemrauschen liegt, aber nicht zu Geisterobjekten.

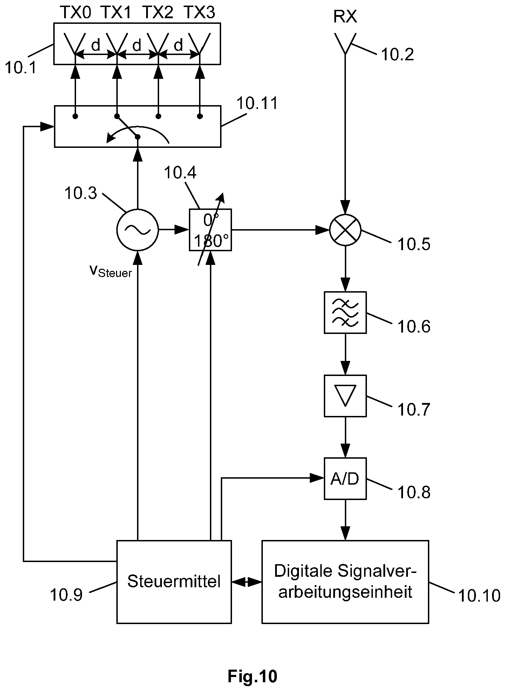

### Ausführung 2 nach Fig. 10

Bisher wurde bei der Ausführung 1 nach Fig. 1 der Idealfall betrachtet, dass nur Leistung über die Sendeantenne 1.1 abgestrahlt wird. Tatsächlich wird aber auch Leistung über die Empfangsantennen 1.2 abgestrahlt, da die Mischer 1.5 nicht ideal isolieren, also ein Teil der vom Oszillator stammenden Eingangsleistung des Mischers durch diesen zu den Empfangsantennen durchleckt und dort abgestrahlt wird.

Für 24GHz-Schmalbandradare, welche im sogenannten ISM-Band arbeiten, ist die vom Oszillator zu den Sendeantennen abgegebene Leistung mindestens gleich groß wie die zu den Mischern abgegebene Leistung. Da die Mischer typischerweise eine Isolation von wenigstens 20dB haben, ist die über die Empfangsantennen abgestrahlte Leistung gegenüber der eigentlichen Sendeleistung (aus den Sendeantennen) vernachlässigbar. Für 24GHz-Breitbandradare, sogenannte UWB-Radare, gilt eine sehr restriktiven Frequenzzulassung, welche nur die Abstrahlung einer sehr geringen Sendeleistung erlaubt, was dazu führt, dass die über die eigentlichen Empfangsantennen durch unzureichende Isolation ungewollt abgestrahlte Leistung ähnlich groß ist wie die über die Sendeantennen abgestrahlte Leistung. Dies führt bei der Anordnung nach Fig. 1 dazu, dass es im resultierenden Sendeantennendiagramm, welches beide oben erwähnten Leistungsanteile berücksichtigt, zu starken Einbrüchen kommen kann. Siehe dazu Fig. 9. Dies führt dazu, dass in bestimmten Azimutrichtungen das Radarsystem sehr unempfindlich ist, so dass bei diesen Azimutwinkeln zumindest schwach reflektierende Objekte nicht mehr detektiert und damit übersehen werden.

Das nun folgende Ausführungsbeispiel ist ohne weiteres für ein Radarsystem mit einer Mehrzahl von Sendeantennen und zumindest einer Empfangsantenne ausführbar und soll anhand einer Ausführung mit einer Empfangs- und 4 Sendeantennen dargestellt werden.

Deshalb wird nun das in Fig. 10 dargestellte Radarsystem betrachtet. Es unterscheidet sich vom ursprünglichen Radarsystem (Ausführung 1) im Wesentlichen dadurch, dass es nur noch eine einzige Empfangsantenne gibt (statt vier), aber dafür vier äquidistante, in einer Ebene liegende Sendeantennen (statt einer). Die vier Sendeantennen werden über einen Multiplexer 10.11 sequentiell betrieben; in jeder Rampe sendet jeweils nur eine Antenne, wobei von Rampe zu Rampe zur jeweils nächsten Antenne geschaltet wird. Bei insgesamt gleicher Zahl an Rampen (1024) werden bei jeder Sendeantenne 256 Rampen abgestrahlt. Die Signalauswertung besteht weiterhin aus einer dreidimensionalen DFT mit zwei kleinen Unterschieden zu oben: Zum einen hat die zweite DFT nur noch die Länge 256. Zum anderen führt eine nichtverschwindende Relativgeschwindigkeit eines Objekts zu einem linearen Phasenversatz zwischen den Empfangssignalen von den vier sequentiell angesteuerten Sendeantennen. Dieser lineare Phasenversatz überlagert sich zu dem linearen Phasenversatz durch den Azimutwinkel des Objekts. Da die Relativgeschwindigkeit ab der zweiten DFT bestimmt ist, kann der durch sie bewirkte Phasenversatz z. B. vor der dritten DFT oder aber auch später herausgerechnet werden.

Das Radarsystem nach Fig. 10 hat bei UWB-Betrieb ohne Phasenvariationen über die Rampen weiterhin den Nachteil, dass es in den Sendeantennediagrammen wegen der ungewollt über die Empfangsantenne abgestrahlten Leistung zu starken Einbrüchen kommt. Dazu kommt noch das Problem, dass diese über die Empfangsantenne abgestrahlte Leistung die Winkelbildung signifikant verfälscht, also zu einer fehlerhaften Messung des Azimutwinkels von Objekten führt. Grund dafür ist folgender: Die von den Sendeantennen abgestrahlte und an einem Objekt reflektierte Leistung führt abhängig vom Azimutwinkel des Objekts im empfangenen Signal zu einem linearen Phasenversatz über die vier Sendeantennen, dies lässt sich analog zu Fig. 6 erklären. Die von der Empfangsantenne abgestrahlte und an einem Objekt reflektierte Leistung hat im Empfangssignal eine von der benutzten Sendeantenne unabhängige Phase. Deshalb besteht das Empfangssignal aus einem Anteil mit linearem Phasenversatz über die Sendeantennen und einem konstanten Anteil, so dass die Summe nicht mehr einen linearen Phasenversatz über die Sendeantennen aufweist und deshalb die auf der Annahme eines linearen Phasenversatzes basierende Azimutwinkelbildung zu Fehlern führt.

Beide oben beschriebenen Probleme, nämlich Einbrüche in den Sendeantennendiagrammen und fehlerhafte Azimutwinkelbildung, können wieder dadurch vermieden werden, dass die Phase des zum Mischen benutzen Oszillatorsignals durch den schaltbaren Invertierer 10.4 von Rampe zu Rampe zufällig um 180° gedreht oder unverändert gelassen wird. Innerhalb jeder Rampe bleibt die gewählte Einstellung des Invertierers jeweils konstant.

Über die Rampen gesehen wird dadurch die über die Empfangsantenne abgestrahlte Leistung unkorreliert und damit nichtkohärent zu der über die Sendeantennen abgestrahlten Leistung. Die über die Empfangsantenne abgestrahlte und an Objekten reflektierte Leistung wirkt sich in den Empfangssignalen wieder nur als geringes Rauschen in den entsprechenden Entfernungstoren aus. Dieses Rauschen liegt etwa 10·log₁₀(1024) ≈ 30dB unter der Leistung, welche sich ohne die Phasenvariation, also bei kohärenter Integration durch die zweite und dritte DFT über 1024 Rampen, ergeben würde.

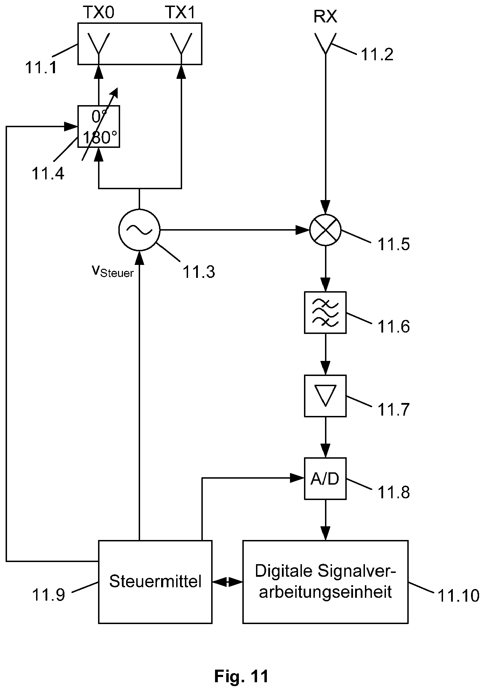

### Ausführung 3 nach Fig. 11

Das nun folgende Ausführungsbeispiel ist ohne weiteres für ein Radarsystem mit einer Mehrzahl von Sendeantennen und zumindest einer Empfangsantenne ausführbar und soll anhand einer Ausführung mit einer Empfangs- und 2 Sendeantennen dargestellt werden.

Nun soll das in Fig. 11 dargestellte einfachere Radarsystem betrachtet werden. Es unterscheidet sich vom vorhergehenden Radsystem nach Ausführung 2 prinzipiell durch folgende Punkte:
- es gibt nur zwei Sendeantennen (statt 4),
- beide Sendeantennen werden gleichzeitig betrieben, also jede der 1024 Rampen wird gleichzeitig auf beiden Antennen ausgesendet (dadurch entfällt der Multiplexer),
- der schaltbare Invertierer 11.4 wird vor einer der beiden Sendeantennen angebracht (anstatt zwischen Oszillator und Mischer).

Durch den schaltbaren Invertierer 11.4 wird die Phase des Signals der ersten Sendeantenne von Rampe zu Rampe alternierend um 0° und 180° variiert - jede zweite Rampe wird das Signal also invertiert, dazwischen bleibt es unverändert; das Signal der zweiten Sendeantenne wird nicht in der Phase variiert. Die alternierende Phase des Signals der ersten Sendeantenne führt dazu, dass die von dieser Sendeantenne herrührenden Empfangssignale über die Rampen mit halber Rampenwiederholfrequenz also 25kHz moduliert sind. Damit sind sie nach der zweiten DFT in ihrer Dopplerfrequenz auch um 25kHz verschoben. Die von der zweiten Sendeantenne herrührenden Empfangssignale sind im Doppler nicht verschoben. Für ein Objekt, dessen Relativgeschwindigkeit z. B. zu einer Dopplerfrequenz von 5 kHz korrespondiert, ergibt sich nach der zweiten DFT für die Empfangssignale von der zweiten Sendeantenne eine Leistungsspitze bei 5kHz und für die Empfangssignale von der ersten Sendeantenne eine Leistungsspitze bei 30kHz. Damit lassen sich nach der zweiten DFT die Anteile, welche von der ersten und der zweiten Sendeantenne stammen, über die Frequenz trennen. Man kann den Anteil der ersten Sendeantenne um 25kHz zurückverschieben und anschließend die dritte DFT für die Winkelbildung durchführen, hier durch eine DFT z. B. der Länge 2.

Anstatt der determinierten alternierenden Phasenvariation könnte man sie auch zufällig gestalten. Dann wäre aber die zweite DFT zweimal zu bestimmen, einmal mit und einmal ohne Korrektur der Phasenvariation. In der mit Phasenkorrektur gerechneten DFT würden die von der ersten Sendeantenne herrührenden Empfangssignale zu Leistungsspitzen führen, während die von der zweiten Sendeantenne herrührenden Empfangssignale ein etwa 30dB darunterliegendes Rauschen erzeugen würden. In der ohne Phasenkorrektur gerechneten DFT wären die Verhältnisse gerade vertauscht. Dadurch wäre auch wieder eine Trennung beider Anteile möglich.

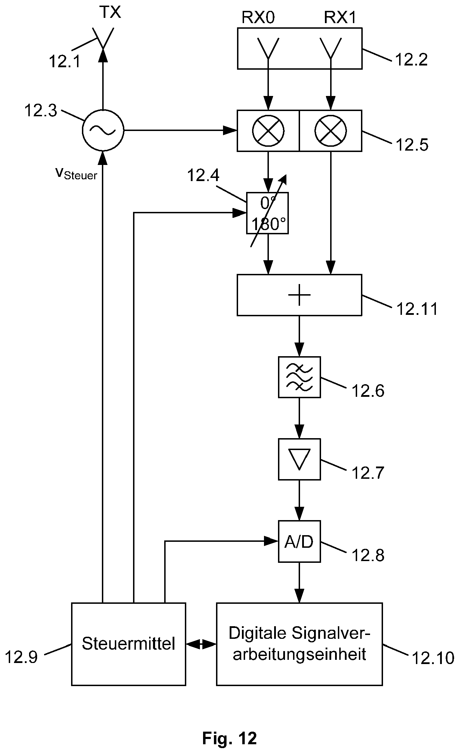

### Ausführung 4 nach Fig. 12

Das nun folgende Ausführungsbeispiel ist ohne weiteres für ein Radarsystem mit zumindest einer Sendeantennen und einer Mehrzahl von Empfangsantennen ausführbar und soll anhand einer Ausführung mit einer Sende- und 2 Empfangsantennen dargestellt werden.

Zuletzt soll das in Fig. 12 dargestellte einfache Radarsystem betrachtet werden. Es unterscheidet sich vom vorhergehenden Radsystem nach Ausführung 2 prinzipiell durch folgende Punkte:
- es gibt nur eine Sendeantennen (statt 2), dafür zwei Empfangsantennen (statt einer),
- die gleichzeitig empfangenen Signale beider Empfangsantennen werden nach dem Mischer im Addierer 12.11 aufsummiert, wobei zuvor das zur ersten Empfangsantenne gehörende Signal den schaltbaren Invertierer 12.4 durchläuft. Durch die Summation ist anschließend nur noch ein Empfangskanal nötig.

Durch den schaltbaren Invertierer 12.4 wird nun die Phase des Mischerausgangssignals von der ersten Empfangsantenne von Rampe zu Rampe alternierend um 0° und 180° variiert. Analog zum vorhergehenden Ausführungsbeispiel 3 sind nach der zweiten DFT nun die von der ersten Empfangsantenne herrührenden Signalanteile in der Dopplerfrequenz um die halbe Rampenwiederholfrequenz verschoben und können somit wieder von den unverschobenen Signalanteilen der zweiten Empfangsantenne getrennt werden.

### Abschließende Bemerkungen

Die zufällige Variation der Phasenlage des schaltbaren Invertierers zwischen 0° und 180° wird durch ein rückgekoppeltes binäres Schieberegister der Länge 31 realisiert; ist der Ausgang des Schieberegisters gleich 1, wird invertiert, für 0 nicht. Damit treten die beiden Zustände im Mittel gleich oft auf und aufeinanderfolgende Zustände, also die jeweilige Phasenvariation von Rampe zu Rampe, sind mit sehr guter Näherung unkorreliert, so dass das durch die Phasenvariation bewirkte Rauschen im dreidimensionalen Spektrum mit sehr guter Näherung weiß ist. Da ein Schiebregister nicht einen völlig zufälligen Prozess darstellt, z. B. hat die Ausgangsfolge eine Periode von 2^{L}, wobei L die Länge des Schieberegisters ist, spricht man oft auch genauer von einem pseudozufälligen Prozess.

Reale Objekte sind oft ausgedehnt und nicht jeder Teil des Objekts hat zum Radarsystem dieselbe Relativgeschwindigkeit, dies gilt insbesondere bei dynamischen Situationen im Nahbereich. Dies führt dazu, dass von einem realen Objekt mehrere Detektionen mit unterschiedlichen Maßen in Entfernung, Azimutwinkel und Relativgeschwindigkeit entstehen können, welche zu unterschiedlichen Teilen des Objekts gehören. Wenn hier also von Objekten die Rede ist, kann es sich dabei auch nur um Teile eines realen Objekts handeln. Abschließend sei erwähnt, dass sich die obigen Überlegungen natürlich auch auf andere Systemarchitekturen anwenden lassen, z. B. ein System mit zwei Sende- und vier Empfangsantennen.

## Patentansprüche

1. Verfahren zur Unterdrückung von Störstrahlung für ein Radarsystem für ein Kraftfahrzeug, wobei
- in einem Messzyklus eine oder mehrere gleicher hochfrequenter Einzelsignale abgestrahlt werden und der zeitliche Abstand dieser Einzelsignale im Mittel größer ist als die zu einer maximal interessierenden Entfernung korrespondierende Laufzeit von empfangenen Signalen, insbesondere zur Bestimmung der Relativgeschwindigkeit von Objekten und zur Erhöhung der Detektionsempfindlichkeit
- empfangenen Signale mit Hochfrequenzsignalen gemischt werden, wodurch niederfrequente Empfangssignale entstehen, welche Folgen von Einzelsignalen darstellen,
**dadurch gekennzeichnet, dass**
- über aufeinanderfolgende niederfrequente Einzelempfangssignale deren Phasenlage dadurch variiert wird, dass die Phasenlage
i) der Einzelsendesignale oder
ii) der zum Mischen benutzten Hochfrequenzsignale oder
iii) der niederfrequenten Einzelempfangssignale selber variiert wird,
das Verfahren zudem zumindest eines der beiden folgenden Merkmale aufweist:
- es wird auf mehreren Antennen gleichzeitig gesendet, wobei die relative Phasenlage der Einzelsendesignale verschiedener Antennen zueinander variiert wird, wodurch die Sendesignale verschiedener Antennen bei Empfang auf derselben Antenne zumindest näherungsweise getrennt werden können,
- es wird auf mehreren Antennen gleichzeitig empfangen,
wobei deren Empfangssignale im Hoch- oder Niederfrequenzbereich addiert werden und bei der Addition die relative Phasenlage der Einzelempfangssignale verschiedener Antennen zueinander variiert wird, wodurch die Empfangssignale verschiedener Antennen später in den Signalverarbeitungsmitteln zumindest näherungsweise wieder getrennt werden können, so dass ein Teil der Prozesssierung der Empfangssignale in einem gemeinsamen Pfad geschehen kann, wobei
die Variation der Phasenlage dazu benutzt wird, dass selbst oder durch andere Systeme bewirkte Störeinkopplungen bzw. - einstrahlungen im Radarfrequenzbereich oder im Bereich, in welchem der niederfrequente Teil einer Auswerteelektronik arbeitet bzw. sensitiv ist, sich bei der Signalverarbeitung gegenüber Empfangssignalen von Objekten unkorreliert verhalten und somit zu einem signifikanten Teil unterdrückt werden.

2. Verfahren nach Anspruch 1, wobei der Amplitudenverlauf der abgestrahlten Signale eine oder mehrere Folgen von kurzen Impulsen beinhaltet und die Variation der Phasenlage jeweils von Impuls zu Impuls stattfindet.

3. Verfahren nach Anspruch 1, wobei der Frequenzverlauf der abgestrahlten Signale eine oder mehrere Folgen linearer Frequenzrampen jeweils gleicher Steigung beinhaltet und die Variation der Phasenlage jeweils von Rampe zu Rampe stattfindet.

4. Verfahren nach einem der vorherigen Ansprüche, bei welchem die Variation der Phasenlage von den Einzelsendesignalen und bzw. oder von den zum Mischen benutzte Hochfrequenzsignalen und/oder der niederfrequenten Einzelempfangssignale in determinierter, pseudozufälliger oder zufälliger Art geschieht oder aus einem determinierten und einem zufälligen oder pseudozufälligen Anteil zusammengesetzt ist.

5. Verfahren nach einem der vorherigen Ansprüche, bei welchem die Variation der Phasenlage dadurch realisiert wird, dass ein Signal wahlweise invertiert, also in der Phase um 180° gedreht oder unverändert gelassen werden kann.

6. Verfahren nach einem der vorhergehenden Ansprüche, wobei bei zeitgleichem Senden und Empfangen mit unterschiedlichen Antennen durch die Variation der Phasenlagen Anteile der zum Mischen benutzten Hochfrequenzsignale, welche durch zum Beispiel nicht ideale Entkopplung oder nicht vollständige Rückwärtsisolation des Empfangspfads über die Empfangsantennen ungewollt ausgesendet werden, von den über die Sendeantennen ausgesendeten Signalen nach Reflektion an Objekten und Empfang in den Signalverarbeitungsmitteln zumindest weitestgehend getrennt werden.

7. Verfahren nach Anspruch 6, bei welchem es mehrere Antennen für Senden und bzw. oder Empfangen gibt und welche in unterschiedlichen Kombinationen parallel oder seriell benutzt werden,
aus den bei unterschiedlichen Kombinationen der Antennen durch Reflektion an Objekten empfangenen Signalen der Winkel dieser Objekte zum Radarsystem bestimmt wird und durch die Variation der Phasenlage Fehler in der Winkelbestimmung zumindest weitestgehend vermieden werden.

8. Verfahren nach Anspruch 6, bei welchem die Variation der Phasenlage derart ausgestaltet ist, dass es durch Überlagerung der über Sende- und Empfangsantennen abgestrahlten Leistung nicht zu Winkelbereichen mit signifikant reduzierter Detektionsempfindlichkeit kommt.

9. Verfahren nach einem der vorherigen Ansprüche, bei welchem in den Signalverarbeitungsmitteln eine Integration über die niederfrequenten Einzelempfangssignale stattfindet, welche korreliert zu den Nutzanteilen und unkorreliert zu den Störanteilen ist, so dass die Störanteile sich nur als Rauschen ausprägen und somit nicht zu falschen Objektdetektionen und bzw. oder signifikant fehlerhafter Bestimmung von Objektmaßen führen können.

10. Verfahren nach Anspruch 1, wobei gleichzeitig auf zwei Antennen gesendet wird und die relative Phasenlage der Einzelsendesignale beider Antennen zueinander zufällig bzw. pseudozufällig oder von Einzelsendesignal zu Einzelsendesignal alternierend um 0° und 180° variiert wird.

11. Verfahren nach einem der vorherigen Ansprüche, bei welchem vor, bei oder nach Auswertung jeweils eines Einzelempfangssignals die dabei benutzte Phasenlagenvariation korrigiert wird.

12. Radarsystem zur Umfelderfassung für ein Kraftfahrzeug, das mittels eines Verfahrens nach einem der vorherigen Ansprüche Auswirkungen von Störstrahlung unterdrückt, umfassend
- Sendemittel zur Abstrahlung von Sendesignalen, wobei die Sendemittel mehrere Antennen beinhalten können, und derart ausgestaltet sind, dass der Frequenzverlauf der abgestrahlten Signale eine oder mehrere Folgen linearer Frequenzrampen jeweils gleicher Steigung beinhaltet
- Empfangsmittel zum Empfang von an Objekten reflektierten Sendesignalen, wobei die Empfangsmittel mehrere Antennen beinhalten können,
- Signalverarbeitungsmittel zur Prozesssierung der empfangenen Signale und
- in einem Messzyklus eine oder mehrere Folgen gleicher hochfrequenter Einzelsignale abgestrahlt werden und der zeitliche Abstand dieser Einzelsignale im Mittel größer ist als die zu einer maximal interessierenden Entfernung korrespondierende Laufzeit von empfangenen Signalen, insbesondere zur Bestimmung der Relativgeschwindigkeit von Objekten und zur Erhöhung der Detektionsempfindlichkeit
- empfangenen Signale mit Hochfrequenzsignalen gemischt werden, wodurch niederfrequente Empfangssignale entstehen, welche Folgen von Einzelsignalen darstellen,
**dadurch gekennzeichnet, dass**
- zudem Mittel zur Phasendrehung von Einzelsignalen vorgesehen sind und über aufeinanderfolgende niederfrequente Einzelempfangssignale deren Phasenlage dadurch variiert wird, dass mit den Mitteln zur Phasendrehung die Phasenlage
i) der Einzelsendesignale oder
ii) der zum Mischen benutzten Hochfrequenzsignale oder
iii) der niederfrequenten Einzelempfangssignale selber variiert wird und
- Auswertemittel zur Analyse der niederfrequenten Signale vorgesehen sind und die Auswertemittel ein Speichermedium umfassen, auf dem ein Verfahren nach einem der vorherigen Ansprüche hinterlegt ist.

## Claims

1. A method for the suppression of interference radiation for a radar system for a motor vehicle, wherein
- one or several sequences of identical high-frequency individual signals are radiated in a measuring cycle and the average time interval of said individual signals is greater than the propagation time of received signals that corresponds to a maximum distance of interest, particularly for determining the relative velocity of objects and for increasing the detection sensitivity,
- received signals are mixed with high-frequency signals, whereby low-frequency receiving signals are generated that represent sequences of individual signals,
**characterized in that**
- the phase position thereof is varied over successive low-frequency individual receiving signals by varying the phase position
i) of the individual transmitting signals or
ii) or of the high-frequency signals used for mixing or
iii) of the low-frequency individual receiving signals themselves,
the method additionally comprises at least one of the following two features:
- several antennas transmit simultaneously, wherein the phase position of the individual transmitting signals of different antennas relative to each other is varied, thereby allowing an at least approximate separation of the transmitting signals of different antennas when received by the same antenna,
- several antennas receive simultaneously, wherein a summation of their receiving signals in the high-frequency or low-frequency range is performed and the phase position of the individual receiving signals of different antennas relative to each other is varied during said summation, thereby allowing an at least approximate subsequent separation of the receiving signals of different antennas in the signal processing means so that a part of the processing of the receiving signals can be performed in a shared path, wherein
the variation of the phase position is used for making interference coupling or interference radiation caused by the radar system itself or by other systems behave in an uncorrelated manner relative to received signals of objects during signal processing so that a significant part of said coupling or radiation can be suppressed, said interference coupling or interference radiation occurring in the radar frequency range or in the range in which the low-frequency part of an electronic evaluation unit operates or is sensitive.

2. The method according to Claim 1, wherein the amplitude curve of the radiated signals includes one or several sequences of short pulses and the phase position is varied from pulse to pulse in each case.

3. The method according to Claim 1, wherein the frequency curve of the radiated signals includes one or several sequences of linear frequency ramps of identical slope each and the phase position is varied from ramp to ramp in each case.

4. The method according to any one of the preceding claims, in which the variation of the phase position of the individual transmitting signals and/or of the high-frequency signals used for mixing and/or of the low-frequency individual receiving signals is a determinate, pseudo-random or random variation or is made up of a determinate component and a random or pseudo-random component.

5. The method according to any one of the preceding claims, in which the phase position is varied by enabling a signal to be optionally inverted, i.e. by enabling the phase of the signal to be rotated by 180° or to be left unchanged.

6. The method according to any one of the preceding claims, wherein, when different antennas transmit and receive simultaneously, at least a large part of components of the high-frequency signals used for mixing that are unintentionally radiated by the receiving antennas on account of, for example, non-ideal decoupling or incomplete reverse isolation of the receiving path are separated, by the variation of the phase positions, from the signals radiated by the transmitting antennas after their reflection from objects and reception in the signal processing means.

7. The method according to Claim 6, in which there are several antennas for transmitting and/or receiving that are used in different combinations in a parallel or serial manner, the angle of objects relative to the radar system is determined from the signals that are received by reflection from these objects in different antenna combinations, and angle determination errors are at least largely avoided by the variation of the phase position.

8. The method according to Claim 6, in which the variation of the phase position is configured such that the superposition of the power radiated by the transmitting antennas and by the receiving antennas does not result in any angle regions with significantly reduced detection sensitivity.

9. The method according to any one of the preceding claims, in which an integration over the low-frequency individual receiving signals is performed in the signal processing means that is correlated to the useful components and uncorrelated to the spurious components so that the spurious components only result in noise and thus cannot result in incorrect object detection and/or in a significantly incorrect determination of object quantities.

10. The method according to Claim 1, wherein two antennas transmit simultaneously and the phase position of the individual transmitting signals of the two antennas relative to each other is varied in a random or pseudo-random manner or alternately from individual transmitting signal to individual transmitting signal by 0° and 180°.

11. The method according to any one of the preceding claims, in which prior to, during or after the evaluation of each individual receiving signal, the phase position variation used is corrected.

12. A radar system for covering the surroundings of a motor vehicle, which suppresses effects of interference radiation by means of a method according to any one of the preceding claims, comprising
- transmitting means for the radiation of transmitting signals, wherein said transmitting means may include several antennas, and are configured such that the frequency curve of the radiated signals includes one or several sequences of linear frequency ramps of identical slope each,
- receiving means for the reception of transmitting signals reflected from objects, wherein said receiving means may include several antennas,
- signal processing means for processing the received signals, and
- one or several sequences of identical high-frequency individual signals are radiated in a measuring cycle and the average time interval of said individual signals is greater than the propagation time of received signals that corresponds to a distance of maximal interest, particularly for determining the relative velocity of objects and for increasing the detection sensitivity,
- received signals are mixed with high-frequency signals, whereby low-frequency receiving signals are generated that represent sequences of individual signals,
**characterized in that**
- means for phase angle rotation of individual signals are also provided and the phase position thereof is varied over successive low-frequency individual receiving signals by varying the phase position
i) of the individual transmitting signals or
ii) of the high-frequency signals used for mixing or
iii) of the low-frequency individual receiving signals themselves by said means for phase angle rotation, and
- evaluation means for analysing the low-frequency signals are provided, and the evaluation means include a storage medium on which a method according to any one of the preceding claims is stored.

## Revendications

1. Procédé de suppression d'interférences pour un système de radar pour un véhicule automobile, où
- un ou plusieurs signaux individuels identiques de haute fréquence sont émis lors d'un cycle de mesure et l'intervalle temporel de ces signaux individuels est en moyenne supérieur au temps de propagation des signaux reçus correspondant à une distance d'intérêt maximale, en particulier pour la détermination de la vitesse relative d'objets et pour l'élévation de la sensibilité de détection,
- des signaux reçus sont mélangés à des signaux haute fréquence, des signaux de réception basse fréquence étant ainsi générés, lesquels constituent des séquences de signaux individuels,
**caractérisé en ce que**
- sur des signaux de réception individuels basse fréquence successifs, la position de phase de ceux-ci est variée en variant la position de phase
i) des signaux d'émission individuels ou
ii) des signaux haute fréquence utilisés pour le mélange, ou
iii) des signaux de réception individuels basse fréquence en tant que tels,
ledit procédé présentant au moins une des deux caractéristiques suivantes :
- une émission simultanée sur plusieurs antennes, la position de phase relative des signaux d'émission individuels de différentes antennes étant variée l'une par rapport à l'autre, les signaux d'émission de différentes antennes pouvant être au moins sensiblement séparés à la réception sur une même antenne,
- une réception simultanée sur plusieurs antennes, les signaux de réception de celles-ci étant ajoutés dans la plage haute ou basse fréquence, et la position de phase relative des signaux de réception individuels de différentes antennes étant variée l'une par rapport à l'autre lors de l'addition, les signaux de réception de différentes antennes pouvant ultérieurement être à nouveau au moins sensiblement séparés dans les moyens de traitement de signaux, si bien qu'une partie du traitement des signaux de réception peut être effectuée sur un trajet commun,
la variation de la position de phase étant exploitée **en ce que** des couplages ou des rayonnements parasites spontanés ou dus à d'autres systèmes dans la plage de fréquences radar ou dans la plage où fonctionne ou est sensible la partie basse fréquence d'une électronique d'évaluation, se comportent de manière non corrélée par rapport à des signaux de réception d'objets lors du traitement de signaux, une grande partie d'entre eux étant ainsi supprimée.

2. Procédé selon la revendication 1, où la réponse en amplitude des signaux diffusés comprend une ou plusieurs séquences d'impulsions brèves, et en ce que la variation de la position de phase se produit d'impulsion en impulsion.

3. Procédé selon la revendication 1, où la réponse en fréquence des signaux diffusés comprend une ou plusieurs séquences de rampes de fréquences linéaires à pente identique et en ce que la variation de la position de phase se produit de rampe en rampe.

4. Procédé selon l'une des revendications précédentes, où la variation de la position de phase des signaux d'émission individuels et/ou des signaux haute fréquence utilisés pour le mélange et/ou des signaux de réception individuels basse fréquence se produit de manière définie, pseudo-aléatoire ou aléatoire, ou est constituée d'une part définie et d'une part aléatoire ou pseudo-aléatoire.

5. Procédé selon l'une des revendications précédentes, où la variation de la position de phase est réalisée en ce qu'un signal peut être sélectivement inversé, autrement dit être tourné de 180° dans la phase, ou être laissé inchangé.

6. Procédé selon l'une des revendications précédentes, où à l'émission et à la réception simultanées par différentes antennes par variation des positions de phase, des parts des signaux haute fréquence utilisés pour le mélange, émises accidentellement par les antennes réceptrices notamment par découplage non idéal ou par rétro-isolation incomplète du trajet de réception, sont presque totalement séparées des signaux émis par les antennes émettrices après réflexion sur des objets et réception dans les moyens de traitement de signaux.

7. Procédé selon la revendication 6, où sont présentées plusieurs antennes pour l'émission et/ou la réception, utilisées en parallèle ou en série dans diverses combinaisons, et où, à partir des signaux reçus pour différentes combinaisons des antennes par réflexion sur des objets, l'angle de ces objets avec le système de radar est déterminé et des erreurs de détermination angulaire sont presque totalement évitées par variation de la position de phase.

8. Procédé selon la revendication 6, où la variation de la position de phase est prévue de telle manière qu'une superposition de la puissance diffusée par les antennes émettrices et réceptrices n'entraîne pas de plages angulaires à sensibilité de détection sensiblement réduite.

9. Procédé selon l'une des revendications précédentes, où une intégration par les signaux de réception individuels basse fréquence a lieu dans les moyens de traitement de signaux, laquelle est corrélée aux parts utiles et non corrélée aux parts parasites, si bien que les parts parasites ne se manifestent que sous forme de bruit et ne sont donc pas susceptibles d'entraîner des détections d'objets erronées ou une détermination sensiblement erronée de dimensions d'objets.

10. Procédé selon la revendication 1, où l'émission est simultanée sur deux antennes et où la position de phase relative des signaux d'émission individuels des deux antennes l'une par rapport à l'autre est variée aléatoirement ou pseudo-aléatoirement ou de signal d'émission individuel à signal d'émission individuel de 0° et 180° en alternance.

11. Procédé selon l'une des revendications précédentes, où la variation de position de phase utilisée est corrigée avant, pendant et après analyse de chaque signal de réception individuel.

12. Système de radar pour la détection d'environnement pour un véhicule automobile, supprimant les effets d'interférences au moyen d'un procédé selon l'une des revendications précédentes, comprenant
- des moyens d'émission pour la diffusion de signaux d'émission, lesdits moyens d'émission pouvant comprendre plusieurs antennes, et étant prévus de telle manière que la réponse en fréquence des signaux diffusés comprenne une ou plusieurs séquences de rampes de fréquences linéaires à pente identique,
- des moyens de réception pour la réception de signaux d'émission réfléchis sur des objets, lesdits moyens de réception pouvant comprendre plusieurs antennes,
- des moyens de traitement de signaux pour le traitement des signaux reçus,
- une ou plusieurs séquences de signaux individuels haute fréquence identiques étant émises dans un cycle de mesure et l'intervalle temporel de ces signaux individuels étant en moyenne supérieur au temps de propagation des signaux reçus correspondant à une distance d'intérêt maximale, en particulier pour la détermination de la vitesse relative d'objets et pour l'élévation de la sensibilité de détection
- les signaux reçus étant mélangés à des signaux haute fréquence, des signaux de réception basse fréquence étant ainsi générés, lesquels constituent des séquences de signaux individuels,
**caractérisé en ce que**
- des moyens de rotation de phase de signaux individuels sont en outre prévus et, sur des signaux de réception individuels basse fréquence successifs, la position de phase de ceux-ci est variée en variant avec les moyens de rotation de phase la position de phase
i) des signaux d'émission individuels ou
ii) des signaux haute fréquence utilisés pour le mélange
ou
iii) des signaux de réception individuels basse fréquence en tant que tels,
- et **en ce que** des moyens d'analyse sont prévus pour l'analyse des signaux basse fréquence, et les moyens d'analyse comprennent un support de mémorisation sur lequel est mémorisé un procédé selon l'une des revendications précédentes.
